# EUROPÄISCHE PATENTSCHRIFT

(11) **EP 3 557 104 B1**
(45) Veröffentlichungstag und Bekanntmachung des Hinweises auf die Patenterteilung: **18.08.2021**
(21) Anmeldenummer: 19169254.0
(22) Anmeldetag: 15.04.2019
(51) Int. Cl.: F16K 31/60, G05G 1/10

(54) **DREHGRIFFVORRICHTUNG UND SANITÄRVENTIL**
ROTATING HANDLE DEVICE AND SANITARY VALVE
DISPOSITIF POIGNÉE ROTATIF ET SOUPAPE SANITAIRE

(30) Priorität: 20.04.2018 DE 102018206045
(43) Veröffentlichungstag der Anmeldung: 23.10.2019
(73) Patentinhaber: Hansgrohe SE, 77761 Schiltach (DE)
(72) Erfinder: Balkau, Matthias, 77716 Haslach/Bollenbach (DE); Blattner, Joachim, 77773 Schenkenzell (DE)
(74) Vertreter: Patentanwälte Ruff, Wilhelm, Beier, Dauster & Partner mbB

(56) Entgegenhaltungen:
- CN-U- 201 731 093
- DE-U1-202004 018 747
- JP-A- 2017 116 073
- US-A- 4 423 752
- US-A1- 2016 179 108

## Beschreibung

Die Erfindung bezieht sich auf eine Drehgriffvorrichtung zur Drehbetätigung einer drehverstellbaren Einheit und auf ein damit ausgerüstetes Sanitärventil, wobei die Drehgriffvorrichtung einen Griffkörper mit einem Griffbedienelement als Nutzerschnittstelle und mit einer Drehkopplungsstruktur zur drehfesten Ankopplung des Griffkörpers an die drehverstellbare Einheit in einer einzigen Ankopplungs-Drehposition oder wahlweise in einer von mehreren in Drehrichtung voneinander beabstandeten Ankopplungs-Drehpositionen aufweist.

Drehgriffvorrichtungen dieser Art sind in unterschiedlichsten Ausführungen allgemein bekannt. Beispielsweise werden in der Sanitärtechnik drehverstellbare Absperr-, Mischer- und Umstellventile oftmals mit einer solchen Drehgriffvorrichtung ausgerüstet. Das Griffbedienelement fungiert als Nutzerschnittstelle, d.h. der Benutzer übt die Drehbetätigung der drehverstellbaren Einheit dadurch aus, dass er das Griffbedienelement ergreift und dreht. Über seine Drehkopplungsstruktur ist der Griffkörper drehfest an die drehverstellbare Einheit ankoppelbar.

In manchen Fällen ist die Ankopplung des Griffkörpers nur in einer einzigen Drehposition des Griffkörpers relativ zur drehverstellbaren Einheit möglich. Dies kann z.B. dadurch realisiert sein, dass am einen der beiden Teile eine Ausnehmung und am anderen ein Fortsatz dergestalt angeordnet ist, dass der Fortsatz nur in einer bestimmten Drehposition des Griffkörpers in die Ausnehmung eingreifen kann und dieser Eingriff des Fortsatzes in die Ausnehmung für die Ankopplung des Griffkörpers an die drehverstellbare Einheit notwendig ist. In anderen Fällen kann der Griffkörper wahlweise in einer von mehreren in Drehrichtung voneinander beabstandeten Ankopplungs-Drehpositionen an die drehverstellbare Einheit angekoppelt werden, d.h. es gibt mehrere unterschiedliche, diskrete Drehpositionen, in denen der Griffkörper an die drehverstellbare Einheit angekoppelt werden kann. Dies trifft z.B. bei Anwendungen zu, bei denen die Drehkopplungsstruktur des Griffkörpers als Zahnkranz oder dergleichen ausgebildet ist, der mit einem korrespondierenden Zahnkranz oder dergleichen an der drehverstellbaren Einheit drehfest koppelnd zusammenwirkt. In solchen Ausführungen kann der Griffkörper grundsätzlich in mehreren Drehpositionen an die drehverstellbare Einheit angekoppelt werden, wobei diese diskreten Ankopplungs-Drehpositionen in Drehrichtung voneinander um das Periodizitätsmaß bzw. den Zahnabstand des jeweiligen Zahnkranzes beabstandet sind.

Für entsprechende Anwendungen ist es gewünscht, dass sich das Griffbedienelement in einer bestimmten, definierten Drehposition relativ zur drehverstellbaren Einheit befindet, wenn der Griffkörper an die drehverstellbare Einheit angekoppelt ist und sich die drehverstellbare Einheit in einer bestimmten Position bezüglich ihrer Drehverstellbarkeit befindet, z.B. in einer Ausgangsposition. So kann es z.B. gewünscht sein, dass eine am Griffbedienelement angebrachte Markierung in dieser Position der drehverstellbaren Einheit mit einer Markierung an der drehverstellbaren Einheit fluchtet oder sich jedenfalls an einer definierten Drehposition in Bezug auf die Drehposition der drehverstellbaren Einheit befindet.

Bei den genannten herkömmlichen Drehgriffvorrichtungen kann die Drehposition des Griffbedienelements relativ zur drehverstellbaren Einheit allenfalls dadurch verändert werden, dass der Griffkörper in einer anderen von mehreren möglichen Ankopplungs-Drehpositionen an die drehverstellbare Einheit angekoppelt wird. Da jedoch benachbarte Ankopplungs-Drehpositionen in Drehrichtung um einen zugehörigen Winkelabstand, d.h. Drehabstand, voneinander beabstandet sind, kann das Griffbedienelement in seiner Drehposition relativ zur drehverstellbaren Einheit ebenfalls nur um diesen Drehabstand oder um ein Mehrfaches hiervon verändert werden, eine Veränderung der Drehposition des Griffbedienelements gegenüber der drehverstellbaren Einheit um einen Drehwinkel, der geringer als dieser Drehabstand ist, ist auf diese Weise nicht möglich.

Die Gebrauchsmusterschrift DE 20 2004 018 747 U1 offenbart einen Drehmomentbegrenzer für Ventile, mit dem eine Begrenzung eines maximal möglichen aufzubringenden Drehmomentes auf ein Handrad eines Ventils eines Druckgasbehälters erreicht werden soll, damit das Ventil nicht beschädigt werden kann. Dazu wird auf das Handrad des Ventils ein Handradteller aufgesteckt, der mit dem Drehmomentbegrenzer fest verbunden ist, welcher auf ein bestimmtes maximales Drehmoment, in der Regel 7Nm, eingestellt ist. Auf diesen Drehmomentbegrenzer greift ein weiteres Handrad als Nutzerschnittstelle zum Schließen des Ventils.

Es ist beispielsweise bei Sanitärventilen mit drehverstellbarer Ventileinheit bekannt, eine Drehbegrenzung für die drehverstellbare Ventileinheit vorzusehen, damit diese nur innerhalb eines vorgegebenen, z.B. anschlagsbegrenzten, Winkelbereichs verdreht werden kann. Sanitärventile dieser Art sind beispielsweise in der Patentschrift US 4.423.752, der Offenlegungsschrift US 2016/0179108 A1 und der Gebrauchsmusterschrift CN 201731093 U offenbart.

Der Erfindung liegt als technisches Problem die Bereitstellung einer Drehgriffvorrichtung der eingangs genannten Art, die eine gegenüber dem oben erwähnten Stand der Technik verbesserte Verstellbarkeit bzw. Einstellbarkeit des Griffbedienelements hinsichtlich seiner Drehposition in Bezug auf eine definierte Funktionsstellung der drehverstellbaren Einheit ermöglicht, und eines mit einer solchen Drehgriffvorrichtung ausgerüsteten Sanitärventils zugrunde.

Die Erfindung löst dieses Problem durch die Bereitstellung einer Drehgriffvorrichtung mit den Merkmalen des Anspruchs 1 sowie eines Sanitärventils mit den Merkmalen des Anspruchs 9.

Bei der erfindungsgemäßen Drehgriffvorrichtung beinhaltet der Griffkörper ein erstes Griffkörperteil, das die Drehkopplungsstruktur aufweist, sowie ein zweites Griffkörperteil, welches das Griffbedienelement aufweist. Die beiden Griffkörperteile sind relativ zueinander innerhalb eines Ausricht-Winkelbereichs verdrehbar. Die Drehgriffvorrichtung weist eine nutzerbetätigbare Ausrichteinheit auf. Die Ausrichteinheit koppelt die beiden Griffkörperteile drehfest miteinander. Bei Betätigung der Ausrichteinheit verdreht diese die beiden Griffkörperteile relativ zueinander innerhalb des Ausricht-Winkelbereichs stufenlos.

Durch die stufenlose Verdrehbarkeit der beiden Griffkörperteile relativ zueinander sind das am zweiten Griffkörperteil vorgesehene Griffbedienelement und die am ersten Griffkörperteil vorgesehene Drehkopplungsstruktur mittels dieser Ausrichtbewegung entsprechend stufenlos gegeneinander verdrehbar. Da die Drehkopplungsstruktur, wenn der Griffkörper mit ihr drehfest an der drehverstellbaren Einheit angekoppelt ist, ihrerseits eine definierte Drehposition bezüglich der drehverstellbaren Einheit einnimmt, lässt sich das Griffbedienelement durch die Ausrichteinheit stufenlos so verdrehen, dass es eine definierte Drehposition relativ zur drehverstellbaren Einheit einnimmt. Dies gilt gerade auch in Fällen, in denen diese gewünschte, bestimmte Drehposition des Griffbedienelements relativ zur drehverstellbaren Einheit nicht dadurch erreicht werden kann, dass der Griffkörper mit seiner Drehkopplungsstruktur in einer verdrehten Stellung an die drehverstellbare Einheit angekoppelt wird. Da die Ausrichteinheit die beiden Griffkörperteile drehfest koppelt, drehen sich diese bei der Drehbetätigung des Griffbedienelements zur Drehbetätigung der drehverstellbaren Einheit gemeinsam, d.h. synchron miteinander.

Somit kann das zweite Griffkörperteil mithilfe des ersten Griffkörperteils und mithilfe der als Justiereinrichtung dienenden, nutzerbetätigbaren Ausrichteinheit in seiner Drehposition relativ zur drehverstellbaren Einheit stufenlos verstellbar an die drehverstellbare Einheit angekoppelt werden. Das erste Griffkörperteil mit der Drehkopplungsstruktur fungiert folglich quasi als ein Adapterteil für das Anbringen des zweiten Griffkörperteils mit dem Griffbedienelement an der drehverstellbaren Einheit in mittels der Ausrichteinheit stufenlos verstellbarer Drehposition. Die Ausrichteinheit kann folglich vom Benutzer für dieses relative Verdrehen der beiden Griffkörperteile betätigt werden, ohne dass er hierbei das Griffbedienelement in dessen Funktion als Nutzerschnittstelle zum Drehen der drehverstellbaren Einheit betätigt, d.h. die Ausrichteinheit besitzt eine eigenständige Nutzerbetätigbarkeit unabhängig von bzw. zusätzlich zur Nutzerbetätigbarkeit des Griffbedienelements. Während sich bei der Nutzerbetätigung des Griffbedienelements die beiden Griffkörperteile gemeinsam drehen, verdrehen sie sich bei der Nutzerbetätigung der Ausrichteinheit relativ zueinander. Der Ausricht-Winkelbereich erstreckt sich naturgemäß über einen zur Erfüllung der Ausrichtfunktion benötigten Winkelbereich, der auf den Winkelbetrag begrenzt ist, um den im jeweiligen Anwendungsfall das Griffbedienelement bezüglich der drehverstellbaren Einheit maximal fehljustiert sein kann, z.B. auf einen Winkelbereich von mehr als 0° und bis 360° oder bis zu einem kleineren Maximalwinkel. Bei Bedarf kann dieser Maximalwinkel anschlagdefiniert sein, d.h. ein Anschlag begrenzt in diesem Fall das relative Verdrehen der beiden Griffkörperteile auf den höchstens den maximal benötigten Winkel.

In einer Weiterbildung der Erfindung weist das erste Griffkörperteil einen zylindrischen Abschnitt auf, der auf einer radial inneren oder radial äußeren Seite eine Zahnkranzstruktur beinhaltet, welche die Drehkopplungsstruktur bildet. Dies stellt eine vorteilhafte Gestaltung des ersten Griffkörperteils dar, wobei das erste Griffkörperteil und somit der Griffkörper insgesamt durch die Zahnkranzstruktur geeignet ist, wahlweise in einer von mehreren in Drehrichtung voneinander um einen Zahnabstand von Zähnen der Zahnkranzstruktur voneinander beabstandeten Ankopplungs-Drehpositionen an die drehverstellbare Einheit angekoppelt zu werden. Korrespondierend kann an der drehverstellbaren Einheit eine Zahnkranzstruktur vorgesehen sein, mit der die Zahnkranzstruktur des ersten Griffteils drehfest koppelnd zusammenwirkt.

In einer Weiterbildung der Erfindung weist das zweite Griffkörperteil einen zylindrischen Halteabschnitt auf, und das Griffbedienelement ist am Halteabschnitt in einer einzigen Festlegungs-Drehposition oder wahlweise in einer von mehreren in Drehrichtung voneinander beabstandeten Festlegungs-Drehpositionen lösbar befestigbar. In dieser Ausführung kann folglich das Griffbedienelement vom restlichen zweiten Griffkörperteil abgenommen werden, z.B. im Wartungsfall oder zum Anbringen eines anderen Griffbedienelements. Wenn für das Griffbedienelement mehrere Festlegungs-Drehpositionen vorgesehen sind, kann dies wie im Fall der mehreren Ankopplungs-Drehpositionen für die Drehkopplungsstruktur dazu dienen, das Griffbedienelement bei Bedarf in einer anderen Festlegungs-Drehposition am zylindrischen Halteabschnitt festzulegen, was zusätzlich zu einer flexiblen Verstellbarkeit der Drehposition des Griffbedienelements relativ zu einer bestimmten Drehposition der Drehkopplungsstruktur bzw. der drehverstellbaren Einheit beitragen kann, in diesem Fall um Drehstellungsinkremente versetzt, die dem Abstand benachbarter Festlegungs-Drehpositionen entsprechen.

In einer Ausgestaltung der Erfindung beinhaltet der zylindrische Halteabschnitt des zweiten Griffkörperteils eine Zahnkranzstruktur auf einer radial inneren oder radial äußeren Seite, wobei die Zahnkranzstruktur eine erste Drehfestlegungsstruktur bildet. Korrespondierend dazu beinhaltet das Griffbedienelement einen zylindrischen Abschnitt mit einer Zahnkranzstruktur auf einer radial äußeren oder radial inneren Seite, wobei diese Zahnkranzstruktur eine mit der ersten Drehfestlegungsstruktur drehfest zusammenwirkende zweite Drehfestlegungsstruktur bildet. Damit kann das Griffbedienelement in verschiedenen, sich um den Zahnabstand dieser Zahnkranzstruktur unterscheidenden Drehpositionen am restlichen zweiten Griffkörperteil lösbar angebracht werden.

In einer Weiterbildung der Erfindung weist von dem ersten und dem zweiten Griffkörperteil das eine Griffkörperteil einen radialen Ausrichtfortsatz und das andere Griffkörperteil eine Ausrichtaufnahme auf. Der Ausrichtfortsatz greift anschlagbegrenzt innerhalb des Ausricht-Winkelbereichs verdrehbar in die Ausrichtaufnahme ein. Dies stellt eine vorteilhafte konstruktive Realisierung für die relative Verdrehbarkeit der beiden Griffkörperteile innerhalb des Ausricht-Winkelbereichs dar.

In einer Ausgestaltung der Erfindung weist die Ausrichteinheit eine sich in der Ausrichtaufnahme abstützende Justierschraube auf. Die Justierschraube ist mit dem Ausrichtfortsatz gewindegekoppelt, d.h. die Justierschraube und der Ausrichtfortsatz wirken über ein Gewinde zusammen. Eine Verdrehung der Justierschraube führt zu einer Verdrehung des Ausrichtfortsatzes in der Ausrichtaufnahme innerhalb des Ausricht-Winkelbereichs. Dies stellt eine konstruktiv und funktionell vorteilhafte Realisierung der Ausrichteinheit dar. Zudem trägt diese Ausgestaltung zu einer bei Bedarf gewünschten, kompakten Bauform der Drehgriffvorrichtung bei.

In einer weiteren Ausgestaltung der Erfindung ist die Justierschraube mit einem Außengewinde in einem Innengewinde des Ausrichtfortsatzes oder mit einem Innengewinde in einem Außengewinde des Ausrichtfortsatzes angeordnet. Zusätzlich oder alternativ ist die Justierschraube mit zur Radialrichtung des Ausrichtfortsatzes tangentialer Längsachse angeordnet. Dies stellt konstruktiv und funktionell vorteilhafte Anordnungsmöglichkeiten der Justierschraube dar.

In einer Ausgestaltung der Erfindung beinhaltet das die Ausrichtaufnahme aufweisende Griffkörperteil eine Betätigungszugangsbohrung für die Justierschraube. Über die Betätigungszugangsbohrung ist ein Zugang geschaffen, der dem Benutzer die problemlose Betätigung der Justierschraube ermöglicht.

Das erfindungsgemäße Sanitärventil umfasst eine drehverstellbare Ventileinheit, die einen Drehzapfen aufweist und von irgendeiner herkömmlichen Bauart sein kann. Zusätzlich beinhaltet das Sanitärventil die erfindungsgemäße Drehgriffvorrichtung, wobei der Griffkörper der Drehgriffvorrichtung mit seiner Drehkopplungsstruktur drehfest an den Drehzapfen der drehverstellbaren Ventileinheit ankoppelbar ist. Damit kann der Benutzer bei diesem Sanitärventil die Ventileinheit mittels der Drehgriffvorrichtung betätigen, und das Griffbedienelement der Drehgriffvorrichtung lässt sich in seiner Drehposition mittels der erfindungsgemäßen Gestaltung des Griffkörpers und der erfindungsgemäß vorgesehenen Ausrichteinheit in seiner Drehposition exakt gegenüber der Drehkopplungsstruktur des Griffkörpers und damit auch gegenüber dem Drehzapfen der Ventileinheit ausrichten. Das Sanitärventil kann z.B. ein Absperrventil oder ein Mischventil oder ein Umstellventil sein, wie sie u.a. in sanitären Auslaufarmaturen an Waschtischen, Küchenspülen und Badewannen und in Duschbrausesystemen verwendet werden.

Vorteilhafte Ausführungsformen der Erfindung sind in den Zeichnungen dargestellt. Diese und weitere vorteilhafte Ausführungsformen der Erfindung werden nachfolgend unter Bezugnahme auf die Zeichnungen näher erläutert. Hierbei zeigen:
- Fig. 1: eine Blockdiagrammdarstellung einer Drehgriffvorrichtung zur Drehbetätigung einer drehverstellbaren Einheit,
- Fig. 2: eine schematische Drehpositionsdarstellung für die Drehgriffvorrichtung von Fig. 1 in einer nicht ausgerichteten Lage,
- Fig. 3: die Darstellung von Fig. 2 in einer ausgerichteten Lage der Drehgriffvorrichtung,
- Fig. 4: eine perspektivische Explosionsansicht einer Drehgriffvorrichtung mit erstem und zweitem Griffkörperteil und Ausrichteinheit bei abgenommenem Griffbedienelement,
- Fig. 5: eine Seitenansicht der Drehgriffvorrichtung von Fig. 4,
- Fig. 6: eine Draufsicht von unten auf die Drehgriffvorrichtung von Fig. 4,
- Fig. 7: eine Schnittansicht längs einer Linie VII-VII von Fig. 5,
- Fig. 8: eine Seitenansicht eines Sanitärventils mit der Drehgriffvorrichtung der Fig. 4 bis 7 im Längsschnitt,
- Fig. 9: eine Längsschnittansicht der Drehgriffvorrichtung von Fig. 8 mit einem angrenzenden Teil einer drehverstellbaren Ventileinheit des Sanitärventils in einer zu derjenigen von Fig. 8 senkrechten Längsschnittebene,
- Fig. 10: die Ansicht von Fig. 9 mit montiertem Griffbedienelement und
- Fig. 11: eine Schnittansicht längs einer Linie XI-XI von Fig. 10.

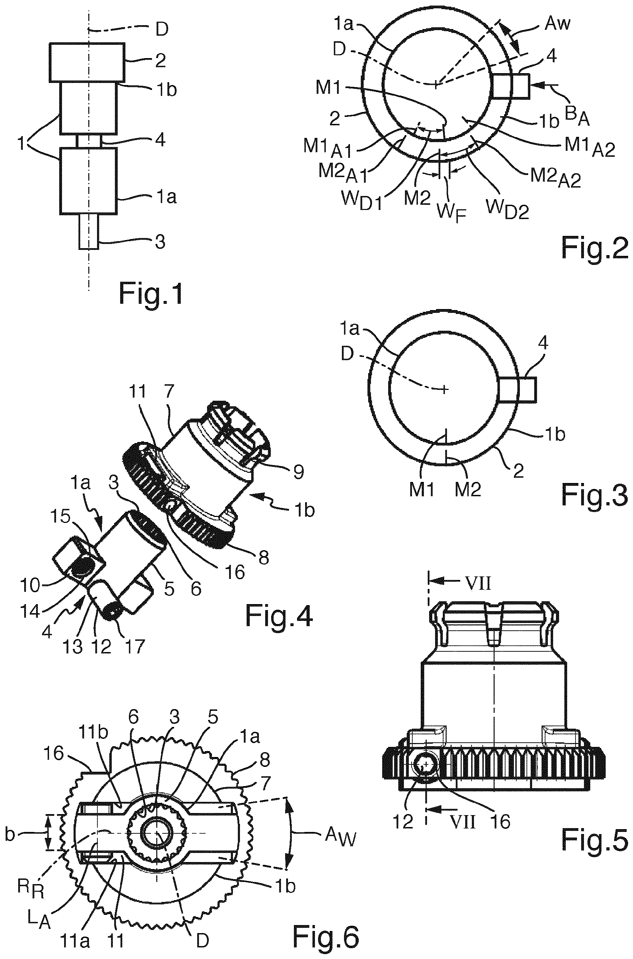

Die in den Fig. 1 bis 3 blockdiagrammatisch veranschaulichte Drehgriffvorrichtung ist zur Drehbetätigung einer drehverstellbaren Einheit eingerichtet und weist einen Griffkörper 1 mit einem Griffbedienelement 2 als Nutzerschnittstelle und mit einer Drehkopplungsstruktur 3 zur drehfesten Ankopplung des Griffkörpers 1 an die drehverstellbare Einheit in einer einzigen Ankopplungs-Drehposition oder wahlweise in einer von mehreren, in Drehrichtung voneinander beabstandeten Ankopplungs-Drehpositionen auf. Als drehverstellbare Einheit, an welche die Drehgriffvorrichtung ankoppelbar ist, kommt eine beliebige herkömmliche drehverstellbare Einheit in Betracht, die hier folglich keiner näheren Erläuterung und zeichnerischen Wiedergabe bedarf. Die drehverstellbare Einheit kann insbesondere eine drehverstellbare Sanitärventileinheit sein, zum Beispiel ein drehverstellbares Absperr-, Mischer- oder Umstellventil für eine Sanitärarmatur.

Der Griffkörper 1 umfasst ein erstes Griffkörperteil 1a, das die Drehkopplungsstruktur 3 aufweist, und ein zweites Griffkörperteil 1b, welches das Griffbedienelement 2 aufweist. Die beiden Griffkörperteile 1a, 1b sind relativ zueinander innerhalb eines Ausricht-Winkelbereichs A_{w} verdrehbar. Für das erste und das zweite Griffkörperteil 1a, 1b eignen sich beliebige, an sich bekannte Griffkörperteile dieser Art, welche die Drehkopplungsstruktur 3 bzw. das Griffbedienelement 2 aufweisen, was hier folglich keiner näheren Erläuterungen bedarf. Die beiden Griffkörperteile 1a, 1b sind durch Verbindungsmittel so miteinander verbunden, dass sie wie gefordert relativ zueinander verdreht werden können. Hierfür sind entsprechende Verbindungsmittel beliebiger herkömmlicher Art verwendbar, was hier folglich keiner näheren Erläuterungen bedarf. Eine Begrenzung der Verdrehbarkeit auf den Asricht-Winkelbereich A_{W} kann beispielsweise durch Verwendung entsprechender herkömmlicher Anschlagmittel realisiert sein, wie sie dem Fachmann zur Begrenzung von Drehbewegungen geläufig sind.

Die Drehgriffvorrichtung beinhaltet des Weiteren eine nutzerbetätigbare Ausrichteinheit 4, die das erste und das zweite Griffkörperteil 1a, 1b drehfest koppelt und die bei Betätigung die beiden Griffkörperteile 1a, 1b relativ zueinander innerhalb des Ausricht-Winkelbereichs A_{W} stufenlos verdreht. Für die Ausrichteinheit sind beliebige herkömmliche Kopplungsmittel verwendbar, mit denen zwei relativ zueinander verdrehbar gehaltene Bauteile drehfest gekoppelt und relativ zueinander innerhalb eines gegebenen Winkelbereichs stufenlos verdreht werden können, wie sie dem Fachmann geläufig sind, was hier folglich keiner näheren Erläuterungen bedarf.

Die erwähnten Drehpositionen und die erwähnte Verdrehbarkeit des Griffkörpers 1 bzw. seiner beiden Griffkörperteile 1a, 1b beziehen sich auf Drehbewegungen um eine Drehachse D der Drehgriffvorrichtung.

Die Schemadarstellungen der Fig. 2 und 3 illustrieren die Ausricht- bzw. Justierfähigkeit der Drehgriffvorrichtung von Fig. 1 hinsichtlich der Drehposition der beiden Griffkörperteile 1a, 1b relativ zueinander und damit, nach Ankopplung der Drehgriffvorrichtung an die drehverstellbare Einheit, bezüglich der Drehposition des Griffbedienelements 2 relativ zum ersten Griffkörperteil 1a und zur daran drehfest angekoppelten, drehverstellbaren Einheit.

Fig. 2 zeigt die Drehgriffvorrichtung in einer nicht ausgerichteten Lage. Hierfür ist beispielhaft angenommen, dass sich eine am ersten Griffteil 1a und/oder an der drehverstellbaren Einheit vorgesehene erste Markierung M1 und eine am zweiten Griffkörperteil 1b, z.B. speziell am Griffbedienelement 2, vorgesehene zweite Markierung M2 in ihrer Drehposition unterscheiden, d.h. ihre Drehpositionen schließen einen Dejustierwinkel bzw. Fehlwinkel W_{F} größer null ein. Die ausgerichtete Drehlage der Drehgriffvorrichtung ist in diesem Fall dadurch definiert, dass die beiden Markierungen M1, M2 fluchtend zueinander liegen, d.h. der Dejustierwinkel W_{F} gleich null ist. Es versteht sich, dass die justierte, ausgerichtete Drehlage für die Drehgriffvorrichtung je nach Bedarf und Anwendungsfall durch eine andere relative Drehstellung der besagten Komponenten definiert sein kann.

Weiter ist in Fig. 2 beispielhaft angenommen, dass der Griffkörper 1 und speziell dessen erstes Griffkörperteil 1a mit der Drehkopplungsstruktur 3 wahlweise in einer von mehreren, in Drehrichtung voneinander beabstandeten Ankopplungs-Drehpositionen an die drehverstellbare Einheit drehfest ankoppelbar ist, wobei diese Ankopplungs-Drehpositionen um einen Drehwinkelabstand W_{D1} voneinander beabstandet sind. Die zugehörige erste Markierung M1 befindet sich dann dabei jeweils in einer um diesen Winkelabstand W_{D} verdrehten Position, was in Fig. 2 repräsentativ durch zwei gestrichelte Alternativlagen M1_{A1}, M1_{A2} symbolisiert ist.

Analog ist in Fig. 2 beispielhaft der Fall angenommen, dass das zweite Griffkörperteil 1b bzw. das Griffbedienelement 2 wahlweise in einer von mehreren, in Drehrichtung voneinander beabstandeten Festlegungs-Drehpositionen festgelegt, d.h. mit dem ersten Griffkörperteil 1a verbunden, werden kann. Symbolisch ist dies in Fig. 2 durch zwei gestrichelt angegebene Alternativlagen M2_{A1}, M2_{A2} für die zugehörige zweite Markierung M2 angegeben. Ein zugehöriger Winkelabstand W_{D2} zwischen jeweils benachbarten Festlegungs-Drehpositionen kann gleich dem Winkelabstand W_{D1} zwischen den benachbarten Ankopplungs-Drehpositionen des ersten Griffkörperteils 1a bzw. der Drehkopplungsstruktur 3 oder von diesem verschieden sein. In alternativen Ausführungen besitzt die Drehgriffvorrichtung nur eine einzige Festlegungs-Drehposition und/oder nur eine einzige Ankopplungs-Drehposition.

Der Benutzer kann die gemäß Fig. 2 vorliegende Fehljustierlage der Drehgriffvorrichtung durch Betätigung der Ausrichteinheit 4 beseitigen, wie in Fig. 2 durch einen auf die Ausrichteinheit 4 wirkenden Betätigungspfeil B_{A} symbolisiert. Speziell kann er durch die Betätigung der Ausrichteinheit 4 die beiden Griffkörperteile 1a, 1b relativ zueinander innerhalb des Ausricht-Winkelbereichs A_{W} stufenlos verdrehen. Dies kann er dafür nutzen, den Dejustierwinkel W_{F}, d.h. den dejustierten Drehwinkelversatz der beiden Markierungen M1, M2, zu beseitigen, d.h. auf null zu reduzieren, so dass die beiden Markierungen M1, M2 ihre gewünschte, ausgerichtete, zum Beispiel zueinander fluchtende Drehlage einnehmen.

Fig. 3 zeigt die Drehgriffvorrichtung in dieser ausgerichteten, justierten Drehlage. Ersichtlich ist dazu lediglich erforderlich, dass der Ausricht-Winkelbereich A_{W}, innerhalb dem die beiden Griffkörperteile 1a, 1b durch Betätigen der Ausrichteinheit 4 relativ zueinander stufenlos verdreht werden können, ausreichend groß gewählt ist, insbesondere mindestens so groß wie der dejustierende Fehlwinkel W_{F}, der maximal auftreten kann. Insbesondere in Realisierungen, bei denen innerhalb des vollen Winkelbereichs von 360° mehrere mögliche Ankopplungs-Drehpositionen und/oder mehrere mögliche Festlegungs-Drehpositionen vorgesehen sind, ist der maximal mögliche Fehlwinkel W_{F} schon dadurch in der Regel merklich reduziert und beträgt dann vorzugsweise nicht mehr als 45° oder 30° und in entsprechenden Fällen weniger als 10°, so dass auch der Ausricht-Winkelbereich A_{W} entsprechend beschränkt bleiben kann. Oftmals wird es daher genügen, dass sich der Ausricht-Winkelbereich A_{W} über höchstens eine wenige Winkelgrade hinweg erstreckt, insbesondere über nur ca. 10° oder weniger. Nach der geschilderten Justierbetätigung hat dann die Drehgriffvorrichtung die gewünschte justierte Lage für die in üblicher Weise durch Drehen des Griffbedienelements bewirkte Drehbetätigung der drehverstellbaren Einheit, wenn die Drehgriffvorrichtung an die drehverstellbare Einheit angekoppelt ist.

Die Fig. 4 bis 7 veranschaulichen eine beispielhafte Ausführung für die Drehgriffvorrichtung der Fig. 1 stellvertretend für eine Vielzahl an möglichen weiteren Realisierungen. In dieser Ausführung weist das erste Griffkörperteil 1a einen zylindrischen Abschnitt 5 mit einer radial inneren, alternativ einer radial äußeren, Zahnkranzstruktur 6 auf, welche die Drehkopplungsstruktur 3 bildet.

Das zweite Griffkörperteil 1b weist einen zylindrischen Halteabschnitt 7 auf, an dem das in den Fig. 1 bis 7 nicht gezeigte Griffbedienelement 2 wahlweise in einer von mehreren, in Drehrichtung voneinander beabstandeten Festlegungs-Drehpositionen lösbar befestigt werden kann. Alternativ ist nur eine einzige Festlegungs-Drehposition zum lösbaren Befestigen des Griffbedienelements 2 am Halteabschnitt 7 vorgesehen. Im gezeigten Beispiel beinhaltet der Halteabschnitt 7 eine radial äußere, alternativ eine radial innere, Zahnkranzstruktur 8, die eine erste Drehfestlegungsstruktur bildet. Mit dieser kann das Griffbedienelement drehfest gekoppelt werden. In axialer Richtung kann das Griffbedienelement beispielsweise unter Verwendung einer am Halteabschnitt 7 wie gezeigt ausgebildeten Aufrast- oder Schnappverbindungsstruktur 9 gehalten werden, wie an sich bekannt, was daher hier keiner näheren Erläuterungen bedarf.

Von dem ersten und zweiten Griffkörperteil 1a, 1b weist im gezeigten Beispiel das eine Griffkörperteil, z.B. das erste Griffkörperteil 1a, einen radialen Ausrichtfortsatz 10 und das andere Griffkörperteil, z.B. das zweite Griffkörperteil 1b, eine Ausrichtaufnahme 11 auf, in die der Ausrichtfortsatz 10 anschlagbegrenzt innerhalb des Ausricht-Winkelbereichs A_{W} verdrehbar eingreift. In einer speziellen Ausführung kann die Ausrichteinheit 4 hierzu, wie gezeigt, eine sich in der Ausrichtaufnahme 11 abstützende Justierschraube 12 aufweisen, die mit dem Ausrichtfortsatz 10 gewindegekoppelt ist und bei Verdrehung den Ausrichtfortsatz 10 innerhalb des Ausricht-Winkelbereichs A_{W} in der Ausrichtaufnahme 11 verdreht. Die Gewindekopplung kann z.B. dadurch realisiert sein, dass die Justierschraube 12 mit einem Außengewinde 13 in ein Innengewinde 14 des Ausrichtfortsatzes 10 eingreift.

Gleichzeitig fungiert die Justierschraube 12 in ihrem Zusammenwirken mit dem Ausrichtfortsatz 10 als Verbindungsmittel zur drehfesten Kopplung der beiden Griffteile 1a, 1b miteinander. Dabei kann zur Montage das erste Griffteil 1a mit seinem zylindrischen Abschnitt 5 in den zylindrischen Halteabschnitt 7 des zweiten Griffkörperteils 1b axial eingeschoben werden, bis der Ausrichtfortsatz 10 in der Ausrichtaufnahme 11 zu liegen kommt. Die Justierschraube 12 kann am Ausrichtfortsatz 10 vormontiert werden.

In entsprechenden Ausführungen ist, wie gezeigt, die Justierschraube 12 mit zu einer Radialrichtung R_{R} des Ausrichtfortsatzes 10 tangentialer, d.h. senkrechter, Längsachse L_{A} angeordnet. Das Innengewinde 14 ist in diesem Fall in einer entsprechend tangential verlaufenden Bohrung 15 im Ausrichtfortsatz 10 ausgebildet.

Im gezeigten Beispiel ist das die Ausrichtaufnahme 11 aufweisende Griffkörperteil, zum Beispiel das zweite Griffkörperteil 1b, mit einer Betätigungszugangsbohrung 16 für die Justierschraube 12 versehen. Zur Betätigung kann die Justierschraube 12, wie gezeigt, an einer zugangsseitigen Stirnseite mit einer Betätigungsaufnahme 17 für ein Betätigungswerkzeug, z.B. einen Schraubendreher oder dergleichen, versehen sein, das über die Betätigungszugangsbohrung 16 eingeführt werden kann.

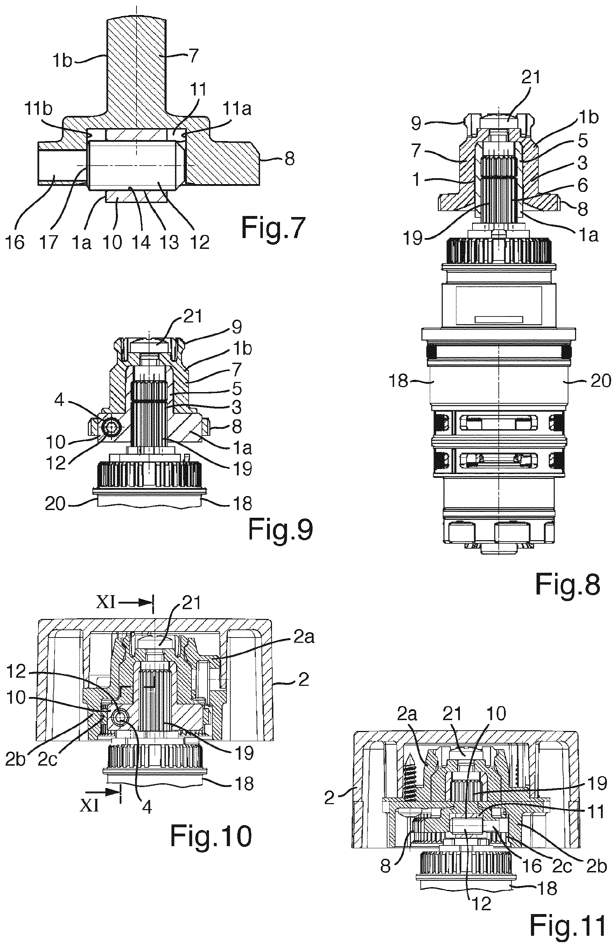

Wie insbesondere aus den Fig. 6 und 7 erkennbar, entspricht die Justierschraube 12 bei diesem gezeigten Ausführungsbeispiel in ihrer Länge der in dieser Richtung gemessenen Weite der Ausrichtaufnahme 11, so dass sich die Justierschraube 12 axial in beiden Richtungen gegen jeweils eine Anschlagfläche 11a, 11b in der Ausrichtaufnahme 11 abstützt. Der Ausrichtfortsatz 10 ist mit in dieser Richtung demgegenüber geringerer Breite b ausgebildet, so dass er sich in beide Drehrichtungen um die Drehachse D in der Ausrichtaufnahme 11 verdrehen kann, wenn die Justierschraube 12 gedreht wird, bis er mit einer jeweiligen Seitenflanke gegen die zugewandte Anschlagfläche 11a, 11b der Ausrichtaufnahme 11 zur Anlage kommt. Diese Anschlagbegrenzungen für den Ausrichtfortsatz 10 definieren folglich in dieser Ausführung den Ausricht-Winkelbereich A_{W}, um den die beiden Griffkörperteile 1a, 1b relativ zueinander verdreht werden können.

Für die Gewindekopplung zwischen Justierschraube 12 und Ausrichtfortsatz 10 ist ausreichend Gewindespiel belassen, um das Verdrehen des Ausrichtfortsatzes 10 innerhalb des Ausricht-Winkelbereichs A_{W} relativ zur sich lediglich um ihre Längsachse L_{A} drehenden Justierschraube 12 zu erlauben. Alternativ zu dieser Gewindekopplung kann ein anderes Kopplungsmittel zwischen Justierschraube 12 und Ausrichtfortsatz 10 vorgesehen sein, zum Beispiel eine Kulissenführung, welche den Ausrichtfortsatz 10 entsprechend um die Drehachse D dreht, wenn die Justierschraube 12 um ihre Längsachse L_{A} gedreht wird.

Optional kann sich der Ausrichtfortsatz 10 wie im gezeigten Ausführungsbeispiel auf diametral gegenüberliegenden Seiten des zylindrischen Abschnitts 5 des ersten Griffkörperteils 1a radial nach außen erstrecken, und entsprechend ist in diesem Fall die Ausrichtaufnahme 11 diametral auf gegenüberliegenden Seiten des Halteabschnitts 7 ausgebildet. In alternativen Ausführungen befindet sich der Ausrichtfortsatz 10 und mit ihm die Ausrichtaufnahme 11 nur an einer Umfangsposition des zugehörigen ersten bzw. zweiten Griffkörperteils 1a, 1b oder es sind mehr als zwei Ausrichtfortsätze 10 und Ausrichtaufnahmen 11 in Umfangsrichtung verteilt an den beiden Griffkörperteilen 1a, 1b ausgebildet. Das Vorhandensein mehrerer Ausrichtfortsätze 10 und korrespondierender Ausrichtaufnahmen 11 kann für entsprechende Anwendungen hinsichtlich der Stabilität der Kopplung der beiden Griffkörperteile 1a, 1b aneinander von Vorteil sein, wobei es in der Regel genügt, die Justierschraube 12 nur bei einer der dann mehreren Paarungen von Ausrichtfortsatz 10 und Ausrichtaufnahme 11 anzuordnen.

Die Fig. 8 bis 11 veranschaulichen eine beispielhafte Verwendung der in den Fig. 4 bis 7 veranschaulichten Drehgriffvorrichtung zur Drehbetätigung einer drehverstellbaren Ventileinheit 18 eines Sanitärventils. Bei der drehverstellbaren Ventileinheit 18 handelt es sich um eine bekannte, von der Anmelderin auf dem Markt befindliche Ventileinheit, die daher hier keiner näheren Erläuterung bedarf, soweit dies über die folgenden Erläuterungen im Zusammenhang mit der Ankopplung der Drehgriffvorrichtung hinausgeht. Von Bedeutung ist hierzu vorliegend lediglich, dass die Ventileinheit 18 einen Drehzapfen 19 aufweist, an den der Griffkörper 1 der Drehgriffvorrichtung mit seiner Drehkopplungsstruktur 3 drehfest ankoppelbar ist.

Die Ventileinheit 18 weist einen im Wesentlichen zylindrischen Ventilkartuschenkörper 20 auf, von dem der Drehlagerzapfen 19 an einer Stirnseite vorsteht, wobei der Drehzapfen 19 drehbeweglich am Kartuschenkörper 20 gehalten ist. Im Inneren des Kartuschenkörpers 20 befinden sich die weiteren Ventilkomponenten in einer je nach gewünschter Ventilfunktion an sich bekannten Anordnung und Konfiguration. Insbesondere kann die Ventileinheit 18 zur Bereitstellung einer Ventilabsperrfunktion in einem Absperrventil und/oder einer Kaltwasser/Warmwasser-Ventilmischfunktion in einem entsprechenden Mischventil und/oder einer Ventilumstellfunktion ausgelegt sein, wobei durch die Ventilumstellfunktion Fluidverbindungen von einem oder mehreren Ventileinlässen zu einem oder mehreren Ventilauslässen wahlweise freigegeben oder abgesperrt werden können. Optional ist der Drehzapfen 19 in entsprechenden Ausführungen zusätzlich axialbeweglich relativ zum Kartuschenkörper 20 an diesem gehalten. In derartigen Ausführungen kann durch axiales Bewegen des Drehzapfens 19 eine zusätzliche Ventilfunktion aktiviert werden, wobei die auf den Drehzapfen 19 aufgesetzte Drehgriffvorrichtung gleichzeitig als axiales Drucktasten-Betätigungselement fungieren kann. In alternativen Ausführungen ist hierfür ein separates Axialbetätigungselement vorgesehen.

Im gezeigten Ausführungsbeispiel ist der Griffkörper 1 mit seinem ersten Griffkörperteil 1a auf den Drehzapfen 19 aufgesetzt, und das zweite Griffkörperteil 1b ist auf das erste Griffkörperteil 1a aufgesetzt und mit einer axialen Sicherungsschraube 21 gesichert, so dass die Drehgriffvorrichtung insgesamt gegen unbeabsichtigtes axiales Lösen gesichert ist.

Die Fig. 10 und 11 zeigen die an die drehverstellbare Ventileinheit 18 angekoppelte Drehgriffvorrichtung einschließlich ihres als Nutzerschnittstelle fungierenden Griffbedienelements 2. Das Griffbedienelement 2 ist in diesem Ausführungsbeispiel am Halteabschnitt 7 des zweiten Griffkörperteils 1b lösbar befestigbar, wobei es kappenartig ausgebildet ist und einen Bedienelementkörper 2a aufweist, mit dem es axial auf das zweite Griffkörperteil 1b aufgesetzt ist. Hierbei ist es gegen axiales Lösen durch Hinterrasten der Aufrast- bzw. Schnappverbindungsstruktur 9 gesichert. In Drehrichtung kann das Griffbedienelement 2 im gezeigten Beispiel in mehreren, in Drehrichtung voneinander beabstandeten Festlegungs-Drehpositionen, alternativ in nur einer einzigen Festlegungs-Drehposition, am zweiten Griffkörperteil 1b angebracht werden. Hierfür beinhaltet das Griffbedienelement 2 einen zylindrischen Abschnitt 2b mit einer radial inneren, alternativ einer radial äußeren, Zahnkranzstruktur 2c, die eine zweite Drehfestlegungsstruktur bildet, welche mit der ersten Drehfestlegungsstruktur drehfest zusammenwirkt, die von der radial äußeren, alternativ radial inneren, Zahnkranzstruktur 8 des Halteabschnitts 7 des zweiten Griffkörperteils 1b gebildet ist. Ein Zahnabstand bzw. Zahnteilungsmaß dieser beiden zusammenwirkenden Zahnkranzstrukturen 8, 2c definiert in diesem Fall den Winkelabstand W_{D2} zwischen jeweils benachbarten Festlegungs-Drehpositionen des Griffbedienelements 2 relativ zum ersten Griffkörperteil 1a bzw. dem Ventilkartuschenkörper 20 der drehverstellbaren Ventileinheit 18.

Falls sich bei der Montage der Drehgriffvorrichtung an der Ventileinheit 18 eine Fehljustagestellung des Griffbedienelements 2 relativ zum Ventilkartuschenkörper 20 ergibt, kann dieser Fehljustage zunächst gestuft im Rahmen der Wahl einer anderen Ankopplungs-Drehposition und/oder einer anderen Festlegungs-Drehposition, falls und soweit in der jeweiligen Ausführung vorhanden, entgegengewirkt werden. Eine dann gegebenenfalls noch verbleibende Fehljustageposition kann durch Betätigen der Ausrichteinheit 4 vollständig beseitigt werden, da sich mit dieser das Griffbedienteil 2 in seiner Drehposition stufenlos gegenüber dem Drehzapfen 19 bzw. dem Ventilkartuschenkörper 20 im Rahmen des Ausricht-Winkelbereichs A_{W} verdrehen lässt. Damit ist stets eine exakt ausgerichtete Positionierung des Griffbedienelements 2 und mit diesem der Drehgriffvorrichtung insgesamt relativ zur angekoppelten drehverstellbaren Einheit erzielbar.

Wie die gezeigten und die weiteren oben erläuterten Ausführungsbeispiele deutlich machen, stellt die Erfindung eine sehr vorteilhafte Drehgriffvorrichtung zur Drehbetätigung einer drehverstellbaren Einheit bereit, wobei die Drehgriffvorrichtung mit ihrem Griffbedienelement in dessen Drehposition relativ zur drehverstellbaren Einheit stets exakt ausgerichtet werden kann, auch wenn zunächst aufgrund von Fertigungsungenauigkeiten oder aus anderen Gründen eine Fehljustage vorliegt.

Es versteht sich, dass die Drehgriffvorrichtung sowohl für drehverstellbare Sanitärventileinheiten als auch für andere drehverstellbare Ventileinheiten und allgemein für beliebige drehverstellbare Einheiten nutzbringend verwendbar ist, die mit einer Drehgriffvorrichtung zur Drehbetätigung ausgerüstet sein sollen und bei denen der Bedarf besteht, dass die Drehgriffvorrichtung bzw. ihr Griffbedienelement in einer bestimmten, ausgerichteten Drehposition relativ zu einer definierten Drehposition der drehverstellbaren Einheit angeordnet sein soll.

## Patentansprüche

1. Drehgriffvorrichtung zur Drehbetätigung einer drehverstellbaren Einheit, insbesondere einer drehverstellbaren Sanitärventileinheit, mit
- einem Griffkörper (1) mit einem Griffbedienelement (2) als Nutzerschnittstelle zur Drehbetätigung der drehverstellbaren Einheit und mit einer Drehkopplungsstruktur (3) zur drehfesten Ankopplung des Griffkörpers an die drehverstellbare Einheit in einer einzigen Ankopplungs-Drehposition oder wahlweise in einer von mehreren in Drehrichtung voneinander beabstandeten Ankopplungs-Drehpositionen,
**dadurch gekennzeichnet, dass**
- der Griffkörper (1) ein erstes Griffkörperteil (1a), das die Drehkopplungsstruktur (3) aufweist, und ein zweites Griffkörperteil (1b) beinhaltet, welches das Griffbedienelement (2) aufweist, wobei das erste und das zweite Griffkörperteil relativ zueinander innerhalb eines begrenzten Ausricht-Winkelbereichs (A_{W}) verdrehbar sind, und
- die Drehgriffvorrichtung eine unabhängig von der Nutzerbetätigung des Griffbedienelements nutzerbetätigbare Ausrichteinheit (4) aufweist, die das erste und das zweite Griffkörperteil drehfest koppelt und bei Betätigung das erste und das zweite Griffkörperteil relativ zueinander innerhalb des Ausricht-Winkelbereichs stufenlos verdreht.

2. Drehgriffvorrichtung nach Anspruch 1, weiter **dadurch gekennzeichnet, dass** das erste Griffkörperteil einen zylindrischen Abschnitt (5) mit einer die Drehkopplungsstruktur bildenden radial inneren oder radial äußeren Zahnkranzstruktur (6) aufweist.

3. Drehgriffvorrichtung nach Anspruch 1 oder 2, weiter **dadurch gekennzeichnet, dass** das zweite Griffkörperteil einen zylindrischen Halteabschnitt (7) aufweist und das Griffbedienelement am Halteabschnitt in einer einzigen Festlegungs-Drehposition oder wahlweise in einer von mehreren in Drehrichtung voneinander beabstandeten Festlegungs-Drehpositionen lösbar befestigbar ist.

4. Drehgriffvorrichtung nach Anspruch 3, weiter **dadurch gekennzeichnet, dass** der Halteabschnitt eine radial innere oder radial äußere Zahnkranzstruktur (8), die eine erste Drehfestlegungsstruktur bildet, aufweist und das Griffbedienelement einen zylindrischen Abschnitt (2b) mit einer eine zweite Drehfestlegungsstruktur bildenden, radial äußeren oder radial inneren Zahnkranzstruktur (2c) aufweist, wobei die zweite Drehfestlegungsstruktur drehfest mit der ersten Drehfestlegungsstruktur zusammenwirkt.

5. Drehgriffvorrichtung nach einem der Ansprüche 1 bis 4, weiter **dadurch gekennzeichnet, dass** von dem ersten und zweiten Griffkörperteil das eine Griffkörperteil einen radialen Ausrichtfortsatz (10) und das andere Griffkörperteil eine Ausrichtaufnahme (11) aufweisen, in die der Ausrichtfortsatz anschlagbegrenzt innerhalb des Ausricht-Winkelbereichs verdrehbar eingreift.

6. Drehgriffvorrichtung nach Anspruch 5, weiter **dadurch gekennzeichnet, dass** die Ausrichteinheit eine sich in der Ausrichtaufnahme abstützende Justierschraube (12) aufweist, die mit dem Ausrichtfortsatz gewindegekoppelt ist und bei Verdrehung den Ausrichtfortsatz innerhalb des Ausricht-Winkelbereichs verdreht.

7. Drehgriffvorrichtung nach Anspruch 6, weiter **dadurch gekennzeichnet, dass** die Justierschraube mit einem Außengewinde (13) in einem Innengewinde (14) des Ausrichtfortsatzes und/oder mit zu einer Radialrichtung (R_{R}) des Ausrichtfortsatzes tangentialer Längsachse (L_{A}) angeordnet ist.

8. Drehgriffvorrichtung nach Anspruch 6 oder 7, weiter **dadurch gekennzeichnet, dass** das die Ausrichtaufnahme aufweisende Griffkörperteil eine Betätigungszugangsbohrung (16) für die Justierschraube aufweist.

9. Sanitärventil mit
- einer drehverstellbaren Ventileinheit (18), die einen Drehzapfen (19) aufweist, und
- einer Drehgriffvorrichtung nach einem der Ansprüche 1 bis 8,
- wobei der Griffkörper (1) mit seiner Drehkopplungsstruktur (3) drehfest an den Drehzapfen ankoppelbar ist.

## Claims

1. Rotatable handle device for rotating actuation of a rotatably adjustable unit, preferably a rotatably adjustable sanitary valve unit, comprising
- a handle body (1) having a handle operating element (2) as a user interface for rotating actuation of the rotatably adjustable unit and having a rotatable coupling structure (3) for rotatably fixed coupling of the handle body to the rotatably adjustable unit in a single coupling rotational position or, selectively, in one of a plurality of coupling rotational positions spaced from one another in rotational direction, **characterized in that**
- the handle body (1) comprises a first handle body part (1a) including the rotatable coupling structure (3), and a second handle body part (1b) including the handle operating element (2), wherein the first and the second handle body parts are turnable relative to each other within a limited alignment angle range (Aw), and
- the rotatable handle device comprises an alignment unit (4) which is user-operable independent of the user operation of the handle operating element and couples the first and the second handle body parts in a rotatably fixed manner and upon actuation turns the first and the second handle body parts relative to each other within the alignment angle range in a stepless manner.

2. Rotatable handle device according to claim 1, further **characterized in that** the first handle body part has a cylindrical section (5) comprising a radial inner or radial outer gear rim structure (6) forming the rotatable coupling structure.

3. Rotatable handle device according to claim 1 or 2, further **characterized in that** the second handle body part comprises a cylindrical holding section (7) and the handle operating element is releasably fixable on the holding section in a single fixation rotational position or, selectively, in one of a plurality of fixation rotational positions spaced from one another in rotational direction.

4. Rotatable handle device according to claim 3, further **characterized in that** the holding section comprises a radial inner or radial outer gear rim structure (8) forming a first rotational fixation structure, and the handle operating element comprises a cylindrical section (2b) having a radial outer or radial inner gear rim structure (2c) forming a second rotational fixation structure, wherein the second rotational fixation structure cooperates with the first rotational fixation structure in a rotatably fixed manner.

5. Rotatable handle device according to any one of claims 1 to 4, further **characterized in that** among the first and second handle body parts one handle body part comprises a radial alignment protrusion (10) and the other handle body part comprises an alignment seat (11), where the alignment protrusion engages in the alignment seat to be turnable in a stop-limited manner within the alignment angle range.

6. Rotatable handle device according to claim 5, further **characterized in that** the alignment unit comprises an adjustment screw (12) supported in the alignment seat, which screw is thread-coupled to the alignment protrusion and, upon turning, turns the alignment protrusion within the alignment angle range.

7. Rotatable handle device according to claim 6, further **characterized in that** the adjustment screw is arranged with an outer thread (13) in an inner thread (14) of the alignment protrusion and/or with a longitudinal axis (L_{A}) tangential to a radial direction (R_{R}) of the alignment protrusion.

8. Rotatable handle device according to claim 6 or 7, further **characterized in that** the handle body part including the alignment seat comprises an actuation access hole (16) for the adjustment screw.

9. Sanitary valve, comprising
- a rotatably adjustable valve unit (18) including a rotatable pin (19), and
- a rotatable handle device according to any one of claims 1 to 8,
- wherein the handle body (1) and its rotatable coupling structure (3) are configured for rotatably fixed coupling to the rotatable pin.

## Revendications

1. Dispositif formant poignée rotative pour l'actionnement en rotation d'une unité réglable en rotation, en particulier d'une unité à vanne sanitaire réglable en rotation, comprenant
- un corps de poignée (1) ayant un élément de commande de poignée (2) en tant qu'interface utilisateur pour l'actionnement en rotation de l'unité réglable en rotation, et ayant une structure de couplage en rotation (3) pour le couplage solidaire en rotation du corps de poignée à l'unité réglable en rotation dans une seule position de couplage en rotation ou au choix dans l'une parmi plusieurs positions de couplage en rotation espacées les unes des autres dans la direction de rotation,
**caractérisé en ce que**
- ledit corps de poignée (1) contient une première partie de corps de poignée (1a) comprenant ladite structure de couplage en rotation (3), et une seconde partie de corps de poignée (1 b) comprenant ledit élément de commande de poignée (2), lesdites première et seconde parties de corps de poignée pouvant tourner l'une par rapport à l'autre à l'intérieur d'une plage angulaire d'alignement (A_{W}) limitée, et
- le dispositif formant poignée rotative comprend une unité d'alignement (4) qui est actionnable par l'utilisateur indépendamment de l'actionnement par l'utilisateur de l'élément de commande de poignée et qui couple les première et seconde parties de corps de poignée solidairement en rotation et qui, lorsqu'elle est actionnée, fait tourner en continu les première et seconde parties de corps de poignée l'une par rapport à l'autre à l'intérieur de la plage angulaire d'alignement.

2. Dispositif formant poignée rotative selon la revendication 1, **caractérisé en outre en ce que** la première partie de corps de poignée comprend une portion cylindrique (5) ayant une structure de couronne dentée (6) radialement intérieure ou radialement extérieure qui forme la structure de couplage en rotation.

3. Dispositif formant poignée rotative selon la revendication 1 ou 2, **caractérisé en outre en ce que** la seconde partie de corps de poignée comprend une portion de retenue cylindrique (7), et l'élément de commande de poignée peut être fixé de manière amovible à la portion de retenue dans une seule position de rotation d'immobilisation ou au choix dans l'une parmi plusieurs positions de rotation d'immobilisation espacées les unes des autres dans la direction de rotation.

4. Dispositif formant poignée rotative selon la revendication 3, **caractérisé en outre en ce que** la portion de retenue comprend une structure de couronne dentée (8) radialement intérieure ou radialement extérieure qui forme une première structure d'immobilisation de rotation, et l'élément de commande de poignée comprend une portion cylindrique (2b) ayant une structure de couronne dentée (2c) radialement extérieure ou radialement intérieure qui forme une seconde structure d'immobilisation de rotation, la seconde structure d'immobilisation de rotation coopérant solidairement en rotation avec la première structure d'immobilisation de rotation.

5. Dispositif formant poignée rotative selon l'une des revendications 1 à 4, **caractérisé en outre en ce que**, parmi les première et seconde parties de corps de poignée, une partie de corps de poignée comprend un prolongement d'alignement (10) radial, et l'autre partie de corps de poignée comprend un logement d'alignement (11) dans lequel le prolongement d'alignement s'engage de façon mobile en rotation à l'intérieur de la plage angulaire d'alignement en étant limité par une butée.

6. Dispositif formant poignée rotative selon la revendication 5, **caractérisé en outre en ce que** l'unité d'alignement comprend une vis d'ajustement (12) qui s'appuie dans le logement d'alignement et qui est couplée par filetage au prolongement d'alignement et qui, lors de la rotation, fait tourner le prolongement d'alignement à l'intérieur de la plage angulaire d'alignement.

7. Dispositif formant poignée rotative selon la revendication 6, **caractérisé en outre en ce que** la vis d'ajustement est placée avec un filetage (13) dans un taraudage (14) du prolongement d'alignement et/ou avec un axe longitudinal (L_{A}) tangentiel à une direction radiale (R_{R}) du prolongement d'alignement.

8. Dispositif formant poignée rotative selon la revendication 6 ou 7, **caractérisé en outre en ce que** la partie de corps de poignée comprenant le logement d'alignement comprend un alésage d'accès d'actionnement (16) pour la vis d'ajustement.

9. Vanne sanitaire, comportant
- une unité de vanne (18) réglable en rotation, qui présente un pivot (19), et
- un dispositif formant poignée rotative selon l'une des revendications 1 à 8,
- 1 le corps de poignée (1) pouvant être couplé solidairement en rotation au pivot par sa structure de couplage en rotation (3).
